# EUROPÄISCHE PATENTSCHRIFT

(11) **EP 0 498 385 B1**
(45) Veröffentlichungstag und Bekanntmachung des Hinweises auf die Patenterteilung: **15.11.1995**
(21) Anmeldenummer: 92101876.8
(22) Anmeldetag: 05.02.1992
(51) Int. Cl.: A21D 6/00

(54) **Verfahren sowie Einrichtung zur Lagerung von Teiglingen für die Herstellung von Backwaren**
Process and installation for the storage of loaves for the preparation of bakery products
Procédé et installation pour la conservation de pâtons pour la fabrication de produits de boulangerie

(30) Priorität: 06.02.1991 DE 4103522; 04.01.1992 DE 4200111
(43) Veröffentlichungstag der Anmeldung: 12.08.1992
(73) Patentinhaber: Ebner, Alfons, D-93098 Mintraching (DE)
(72) Erfinder: Ebner, Alfons, D-93098 Mintraching (DE)
(74) Vertreter: Graf, Helmut, Dipl.-Ing.

(56) Entgegenhaltungen:
- EP-A- 0 056 211
- NL-C- 39 965

## Beschreibung

Die Erfindung bezieht sich auf ein verfahren bzw. auf eine Einrichtung zur Lagerung von Teiglingen gemäß Oberbegriff Patentanspruch 1 bzw. Patentanspruch 6.

Für Bäckereibetriebe wird es insbesondere auch wegen des zunehmenden Mangels an Fachpersonal immer wichtiger, die Arbeitszeit von der Nacht auf den Tag zu verlegen. Um trotzdem frische Backwaren am Tag anbieten zu können, wird in Bäckereibetrieben zunehmend ein Verfahren angewandt, bei dem Teiglinge für Gebäck bzw. Backwaren im voraus hergestellt und im tiefgefrorenen Zustand gelagert werden, so daß diese tiefgefrorenen Teiglinge dann bei Bedarf in der erforderlichen Menge aus einem Lager der weiteren Verarbeitung, d.h. dem Backvorgang zugeführt werden können. Bei diesen Teiglingen handelt es sich z.B. um aus entsprechendem Teig geformte Brote, Semmeln oder andere Backwaren.

Die bisherige Verfahrensweise führt insbesondere bei längeren Lagerzeiten der tiefgefrorenen Teiglinge (Lagerzeiten von mehr als 2 bis 3 Tagen) zu erheblichen Qualitätsverlusten bei der fertiggestellten Backware. Eine Lagerung über längere Zeit ist mit herkömmlichen Verfahrenstechniken daher allenfalls nur bei Einsatz entsprechender zusätzlicher Backmittel (Backhilfsmittel) und Verpackungen möglich.

Bekannt sind Verfahren sowie Vorrichtungen zum Einfrieren von Backwaren (DE-A 36 36 713, EP-A 0 056 211), bei denen die jeweilige Backware während des Einfriervorganges einer Atmosphäre erhöhter Luftfeuchtigkeit ausgesetzt wird. Hiermit läßt sich zwar eine gewisse Verringerung der Feuchtigkeitsverluste während des Einfrierens und/oder auch eine Eisschicht auf der Außenfläche der Backware erreichen. Wegen der geringen Menge an Wasser, die Luft bei der zum Einfrieren notwendigen tiefen Temperatur tatsächlich aufnehmen kann, wird die Eisschicht zumindest zu einem beachtlichen Teil durch Wasser gebildet, das der Backware entzogen wird. Qualitätsverluste können somit mit diesen Verfahren tatsächlich nicht vermieden werden.

Der Erfindung liegt die Aufgabe zugrunde, ein Verfahren bzw. eine Einrichtung aufzuzeigen, mit dem bzw. mit der es ohne Verwendung zusätzlicher Backmittel und/oder Verpackungen möglich ist, eine wesentliche Verbesserung der Lagerung von tiefgefrorenen Teiglingen zu erreichen.

Zur Lösung dieser Aufgabe sind ein Verfahren entsprechend dem kennzeichnenden Teil des Patentanspruches 1 bzw. eine Einrichtung entsprechend dem kennzeichnenden Teil des Patentanspruches 6 ausgebildet.

Bei der Erfindung erfolgt die Kältebehandlung der Teiglinge in wenigstens zwei Stufen bzw. Phasen. In einer ersten Phase erfolgt zunächst das Einfrieren bzw. Tieffrieren des jeweiligen Teiglings entweder durchgehend oder aber zumindest in einem sich an die Außenfläche des Teiglings anschließenden Randbereich genügend großer Dicke.

An diese erste Phase der Kältebehandlung anschließend wird jeder Teigling bei einer Ausführung der Erfindung der Behandlung mit Wasserdampf unterzogen, und zwar derart, daß sich Wasser im Bereich der Oberfläche des jeweiligen Teiglings durch Kondensieren abscheidet, welches dann in einer zweiten Phase der Kältebehandlung zu einer geschlossenen Schicht gefroren wird, die als Schutzschicht während der weiteren Lagerung des tiefgefrorenen Teiglings ein Austrocknen dieses Teiglings verhindert. Die Behandlung mit Wasserdampf erfolgt dabei bevorzugt so, daß während dieser Behandlung ein Auftauen des jeweiligen Teiglings im Bereich einer Randschicht erfolgt, die auf jeden Fall dünner ist als der tiefgefrorene Randbereich des Teiglings. In der aufgetauten Randschicht, die dann in der zweiten Phase der Kältebehandlung zu der Schutzschicht gefriert, ergibt sich ein besonders hoher Anteil an Wasser, der dann beim weiteren Verarbeiten des jeweiligen Teiglings, d.h. beim Backen für die Verquellung der Stärke zur Verfügung steht. Dies wirkt sich vorteilhaft auf die Qualität, d.h. auf die Krustenbildung sowie auf den Geschmack der Kruste der fertigen Backware aus.

Da die Behandlung mit Wasserdampf erst im Anschluß an die erste Phase der Kältebehandlung erfolgt, ist sichergestellt, daß sich nur in der Randschicht, die bei der Wasserdampfbehandlung auftaut, kondensiertes Wasser abscheidet und kein Wasser in darunterliegenden, tiefgefrorenen Bereiche des jeweiligen Teiglings eindringen kann.

Bei einer zweiten Ausführung der Erfindung jeder Teigling nach der ersten Phase der Kältebehandlung mit Wasser behandelt, und zwar zweckmäßigerweise außerhalb des Raumes, in dem das erste Einfrieren bzw. Tieffrieren erfolgte. Durch die Behandlung mit Wasser ergibt sich im Bereich der Außenfläche des Teiglings eine Wasserschicht oder eine Teigschicht mit erhöhtem Wasseranteil. In der anschließenden weiteren Phase der Kältebehandlung wird diese Schicht gefroren, so daß der Teigling an seiner Außenfläche eine dichte, geschlossene Schicht aufweist, die als Schutzschicht während der weiteren Lagerung des tiefgefrorenen Teiglings ein Austrocknen dieses Teiglings wirksam verhindert.

Die Behandlung mit Wasser erfolgt bevorzugt so, daß während dieser Behandlung ein Auftauen des Teiglings im Bereich einer dünnen Randschicht erfolgt, die auf jeden Fall dünner ist als der tiefgefrorene Bereich des Teiglings. In der aufgetauten Randschicht, die dann in der zweiten Phase der Kältebehandlung zu der Schutzschicht gefriert, ergibt sich ein besonders hoher Anteil an Wasser. Außerhalb der dünnen Randschicht ändert sich die Temperatur des Teiglings wenig. Durch die Randschicht mit erhöhtem Wasseranteil steht dem Teigling während der Endgare und während des Backprozesses wesentlich mehr Wasser für die Verkleisterung bzw. Verquellung an seiner Außenschicht zur Verfügung. Hierdurch ergeben sich besondere Qualitätsvorteile, die sich u.a. in einem verbesserten Geschmack, in einer wesentlich zartsplitterigen Kruste, in einer längeren Frischhaltung sowie auch in einem verbesserten optischen Erscheinungsbild der Backware (höherer Glanz der Außenfläche) in Erscheinung treten.

Mit der Erfindung wird somit neben einer Verbesserung der Lagerung von Teiglingen vor allem auch eine wesentliche Verbesserung der Qualität der fertiggestellten Backware erreicht.

Weiterbildungen der Erfindung sind Gegenstand der Unteransprüche.

Die Erfindung wird im folgenden anhand der Figuren an Ausführungsbeispielen näher erläutert. Es zeigen:

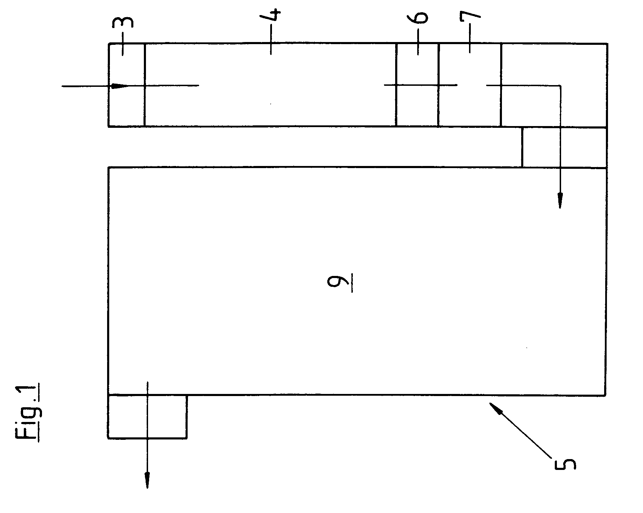

Fig. 1 in sehr vereinfachter, schematischer Draufsicht eine Anlage zur Lagerung von Teiglingen im tiefgefrorenen Zustand;

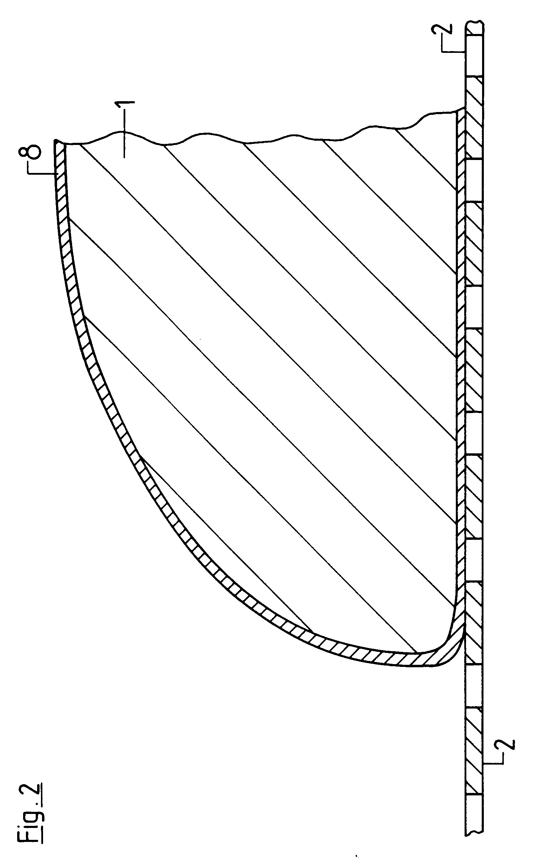

Fig. 2 in schematischer Darstellung und im Schnitt einen unter Verwendung des erfindungsgemäßen Verfahrens tiefgefrorenen Teigling.
Fig. 3 in sehr vereinfachter schematischer Darstellung und in Draufsicht eine weitere mögliche Anlage zur Lagerung von Teiglingen in tiefgefrorenem Zustand;
Fig. 4 in vereinfachter Darstellung und in Seitenansicht einen im Bereich eines Transporteurs angeordneten Schockfroster, eine in Transportrichtung des Transporteurs folgende Behandlungskammer sowie eine sich hieran in Transportrichtung des Transporteurs anschließende Gefrierkammer der Anlage nach Fig. 3.

In den Figuren ist 1 ein beispielsweise aus einem Semmel-oder Brotteig geformter Teigling, der zusammen mit einer Vielzahl weiterer Teiglinge 1 aus Gründen des Betriebsablaufs vor dem eigentlichen Backen gelagert bzw. zwischengelagert werden soll. Die Teiglinge 1 werden für diese Lagerung auf gelochte Bleche 2 aufgebracht, von denen dann jeweils mehrere, in einem sogenannten Stikkenwagen übereinander angeordnet sind. Bei Teiglingen 1 für Semmeln kann die Lagerung auch in Behältern, in Gebinden (Netzen usw.) erfolgen.

Jeder mit einer Vielzahl solcher Bleche beladener Stikkenwagen wird über eine Schleuse 3 in einen Bereich 4 der Lagereinrichtung 5 eingefahren, in welchem (Bereich) ein Schockfrosten bzw. -gefrieren der auf den Blechen 2 angeordneten Teiglinge 1 erfolgt. Mit Hilfe eines nicht näher dargestellten Transporteurs wird jeder Stikkenwagen durch den Bereich 4 von der Eingangsschleuse 3 an eine Ausgangsschleuse 6 bewegt. An die Ausgangsschleuse 6 schließt sich eine Dampfkammer 7 an, in der die schockgefrorenen Teiglinge 1 mit Wasserdampf behandelt werden, der immer dann, wenn eine Charge von schockgefrorenen Teiglingen 1 die Dampfkammer 7 erreicht hat, über dort vorhandene Düsen zeit- und druckgesteuert der Dampfkammer 7 zugeführt wird. Der Wasserdampf in der Dampfkammer 7 führt dazu, daß sich an der gesamten Außenfläche jedes Teiglings Wasser als Kondensat abscheidet. Hierdurch erfolgt ein Auftauen des jeweiligen Teiglings im Bereich einer Randschicht oder -zone 8, und zwar zusammen mit einer erhöhten Wasseraufnahme im Bereich dieser Randzone 8. Die Dicke der aufgetauten Randzone 8 sowie die Menge an kondensiertem und aufgenommenem Wasser lassen sich durch verschiedene Parameter regeln bzw. auf optimale Werte einstellen. Diese Parameter sind u.a.:
Verweildauer der Teiglinge in der Dampfkammer 7, d.h. Fördergeschwindigkeit des Transporteurs durch diese Dampfkammer 7;
Dauer der Dampfzuführung;
Menge des je Zeiteinheit zugeführten Dampfes;
Druck bzw. Temperatur des zugeführten Dampfes.

Haben die Teiglinge 1 in der Randzone 8 die erforderliche Wassermenge aufgenommen, werden die weiterhin auf dem jeweiligen Stikkenwagen bzw. den dortigen Blechen 2 angeordneten Teiglinge 1 in den als Lagerfroster ausgebildeten Bereich 9 der Lagereinrichtung 5 verbracht. Die zuvor in der Dampfkammer aufgetaute und mit zusätzlichem Wasser angereicherte Randzone 8 jedes Teiglings 1 gefriert nach dem Einbringen der Teiglinge 1 in dem Bereich 9, wodurch sich eine geschlossene, den Teigling 1 vor Austrocknen schützende Haut bzw. Schicht bildet.

Die Teiglinge 1 können daher vor ihrer weiteren Verarbeitung, d.h. vor dem Backen über einen längeren Zeitraum im Bereich 9 tiefgefroren gelagert werden, ohne daß ein Qualitätsverlust eintritt. Im Gegenteil steht bei der weiteren Verarbeitung der Teiglinge 1 in der jeweiligen Randzone 8 eine erhöhte Menge an Wasser für die Verquellung der Stärke zur Verfügung, was sich besonders vorteilhaft auf den Geschmack der Kruste beim fertigen Gebäck auswirkt.

Das Eingefrieren der Teiglinge 1 kann mit den unterschiedlichsten Techniken erfolgen, beispielsweise mit einer konventionellen Kältetechnik oder mit CO₂ und/oder mit Stickstoff.

Der der Dampfkammer 7 zugeführte Dampf stammt beispielsweise aus einem Backofen oder wird in einem Dampferzeuger, beispielsweise in einem elektrisch betriebenen Dampferzeuger erzeugt.

Es ist auch möglich, die Dampfbehandlung bzw. das Vereisen der Teiglinge in einem Gärraum oder in einem anderen, dafür geeigneten Raum oder Behältnis vorzunehmen.

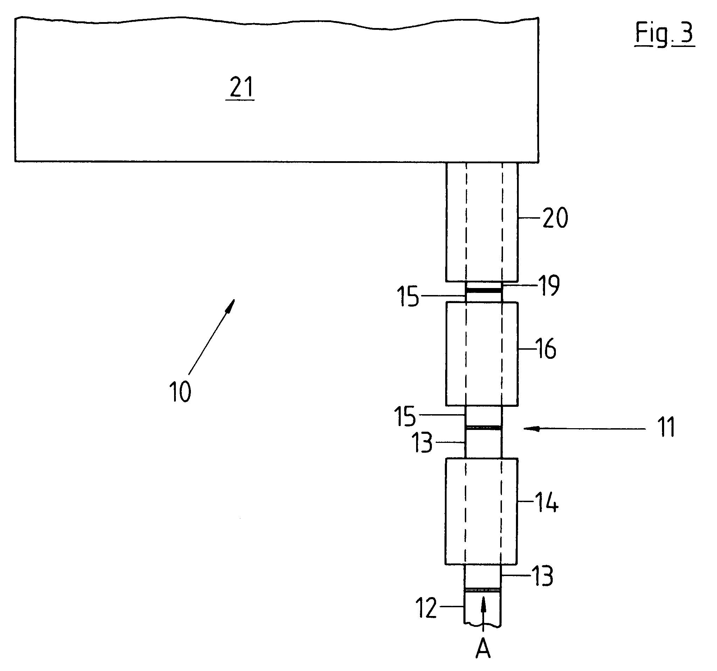

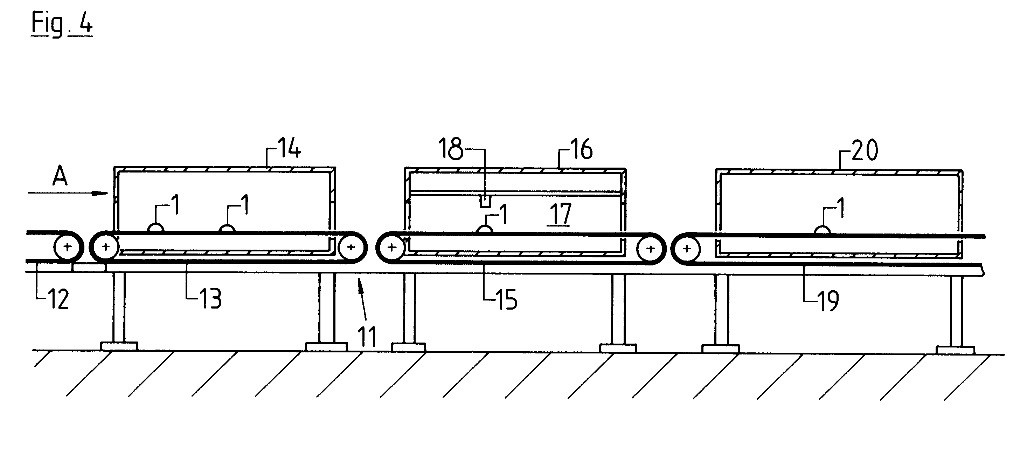

Bei der in den Fig. 3 und 4 allgemein mit 10 bezeichneten Anlage werden über einen Transporteur 11 bzw. über ein ein Transportband 12, welches Teil des Transporteurs 11 ist, die frisch geformten Teiglinge 1 bei der für die Fig. 4 gewählten Darstellung entsprechend dem Pfeil A von links angefördert und an ein nachfolgendes Transportband 13 übergeben, welches ebenfalls Teil des Transporteurs 11 ist und mit dem die Teiglinge 1 durch einen tunnelartigen Schockfroster 14 hindurchbewegt werden. Im Inneren des Schockfrosters 14 erfolgt unter Verwendung geeigneter Tiefkühltechniken ein Schockfrosten bzw. -gefrieren der Teiglinge 1, die dann in diesem Zustand an der dem Transportband 12 abgewandten Ende des Schockfrosters 14 bzw. des Transportbandes 13 an ein nachfolgendes Transportband 15 übergeben werden, welches Teil des Transporteurs 11 ist und mit dem die schockgefrosteten Teiglinge 1 durch eine ebenfalls tunnelartig ausgebildete Behandlungskammer 16 bewegt werden.

Im Innenraum 17 der Behandlungskammer 16 sind in geeigneter Weise verteilt Düsen 18 vorgesehen, aus denen Wasser fein verteilt austritt, und zwar in Form eines Aerosols bzw. Wassernebels. Das aus den Düsen 18 austretende Wasser führt dazu, daß sich ein Teil dieses Wassers auf der Außenfläche jedes Teiglings 1 niederschlägt. Hierdurch erfolgt ein Auftauen des jeweiligen Teiglinges 1 im Bereich einer Randschicht oder -zone 8, und zwar mit erhöhter Wasseraufnahme im Bereich dieser Randzone. In der Randzone 8, die nur äußerst dünn ist und beispielsweise eine Dicke in der Größenordnung von 1-2 mm aufweist, kommt es somit zu einem zusätzlichen Aufquellen bzw. zu einer zusätzlichen Verkleisterung des Teiglinges 8. Im inneren Kern des jeweiligen Teiglinges 1 tritt bei der Behandlung im Innenraum 17 der Behandlungskammer 16 praktisch keine Temperaturänderung ein, d.h. die Teiglinge 1 bleiben mit Ausnahme der dünnen Randschicht oder -zone 8 im tiefgefrorenen Zustand.

An die Behandlungszone 16 bzw. an das dortige Transportband 15 schließt sich ein weiteres Transportband 19 an, welches ebenfalls Teil des Transporteurs 11 ist und mit dem die Teiglinge 1 durch eine tunnelartige Gefrierkammer 20 hindurchbewegt werden. In dieser Gefrierkammer 20 wird die Randschicht 8 der Teiglinge 1 wieder gefroren, so daß sich dort eine geschlossene bzw. dichte und damit den jeweiligen Teigling 1 unter anderem auch vor einem Austrocknen schützende Haut bzw. Schicht bildet.

Die Teiglinge 1 können dann vor ihrer weiteren Verarbeitung, d.h. vor dem Backen über einen längeren Zeitraum in dem als Lagerfroster ausgebildeten Raum 21 der Lagereinrichtung 10 im tiefgefrorenen Zustand gelagert werden.

Das vorbeschriebene Verfahren gestattet eine einwandfreie Lagerung der Teiglinge 1 für das jeweilige Tagesgeschäft, aber auch eine längere Zwischenlagerung dieser Teiglinge. In jedem Fall führt das vorbeschriebene Verfahren zu einer Verbesserung der Qualität des fertigen Gebäcks. Durch die vorbeschriebene Behandlung steht jedem Teigling 1 während der Endgare und auch während des Backprozesses ein erhöhter Anteil an Wasser für die Verkleisterung bzw. Verquellung zur Verfügung. Hierdurch entstehen beim Backprozeß wesentlich mehr Dextrine, was dazu führt, daß das jeweils fertiggestellte Gebäck einen erhöhten Glanz aufweist, sowie auch in geschmacklicher Hinsicht optimal ist. Weitere Qualitätsverbesserungen machen sich hauptsächlich auch in der Rösche und in einer besonders zart splittrigen Kruste des jeweiligen Gebäckes bemerkbar.

Es versteht sich, daß die Dicke der aufgetauten Randzone sowie die Menge an von dem jeweiligen Teigling 1 aufgenommenen Wassers sich durch verschiedene Parameter auf optimale Weise einstellen lassen. Diese Parameter sind unter anderem:
Verweildauer der Teiglinge 1 in der Behandlungskammer 16 bzw. dem Innenraum 17;
Menge des je Zeiteinheit über die Düsen 18 abgegebenen Wassers;
Anordnung und Anzahl der Düsen 18 im Innenraum 17.

Insbesondere das Schockfrosten der Teiglinge 1 kann mit den unterschiedlichsten Techniken erfolgen, beispielsweise mit einer konventionellen Kältetechnik oder mit CO₂ und/oder mit Stickstoff.

Die Erfindung wurde voranstehend an Ausführungsbeispielen beschrieben. Es versteht sich, daß weitere Änderungen sowie Abwandlungen möglich sind.

## Patentansprüche

1. Verfahren zur Lagerung von Teiglingen zur Herstellung von Gebäck, bei dem die Teiglinge einer Behandlung mit Wasser sowie zum Tieffrieren einer Kältebehandlung unterzogen und während der Lagerung im tiefgefrorenen Zustand gehalten werden, dadurch gekennzeichnet, daß die Teiglinge zunächst in einer ersten Phase der Kältebehandlung zumindest in einem äußeren Randbereich tiefgefroren werden, daß die Teiglinge anschließend mit Wasser oder Wasserdamf derart behandelt werden, daß sich im Bereich der Außenfläche jedes Teiglings (1) eine Randschicht (8) aus Teig mit erhöhtem Wasseranteil ergibt, und daß in einer anschließenden weiteren Phase der Kältebehandlung diese Randschicht (8) gefroren wird.

2. Verfahren nach Anspruch 1, dadurch gekennzeichnet, daß die tiefgefrorenen Teiglinge (1) mit dem Wasserdampf derart behandelt werden, daß sich im Bereich der Außenfläche des jeweiligen Teiglings (1) durch Kondensieren des Wasserdampfes ein Randschicht (8) aus Wasser oder mit einem erhöhten Wasseranteil ergibt, und daß in der weiteren Phase der Kältebehandlung diese Randschicht (8) gefroren wird.

3. Verfahren nach Anspruch 1 oder 2, dadurch gekennzeichnet, daß die Behandlung mit Wasserdampf durch Anordnung der Teiglinge (1) in einer Wasserdampf enthaltenden Atmosphäre erfolgt, und zwar vorzusweise in einem Raum oder in einer Kammer (7), dem bzw. der über Öffnungen oder Düsen Wasserdampf bevorzug zeit- und/oder druckgesteuert zugeführt wird,
und/oder daß die Behandlung mit Wasser durch Anordnung der Teiglinge in einer Atmosphäre erfolgt, die Wasser in fein verteilter Form aufweist, wobei bevorzugt die Kältebehandlung der Teiglinge (1) sowie die Behandlung der Teiglinge (1) mit Wasser in unterschiedlichen Räumen (40, 20; 16) erfolgt.

4. Verfahren nach einem der Ansprüche 1 bis 3, dadurch gekennzeichnet, daß die Behandlung der Teiglinge (1) mit Wasser in einem Raum oder in einer Kammer (17) erfolgt, dem bzw. der über Öffnungen oder Düsen (18) das Wasser in fein verteilter Form bzw. als Nebel oder Aerosol zugeführt wird, und zwar vorzugsweise zeit- und/oder druckgesteuert,
und/oder daß die Kältebehandlung der Teiglinge (1) zumindest teilweise durch Expandieren bzw. Verdampfen von flüssigem CO₂-Gas und/oder Stickstoff erfolgt,
und/oder daß die Kältebehandlung der Teiglinge (1) zumindest teilweise unter Verwendung herkömmlicher Kältemaschinen erfolgt,
und/oder daß die Teiglinge (1) in einer der Behandlung mit Wasser vorausgehenden Phase der Kältebehandlung schockgefrostet werden.

5. Verfahren nach einem der Ansprüche 1 bis 4, dadurch gekennzeichnet, daß die Intensität der Behandlung mit Wasser oder Wasserdampf derart gewählt ist, daß der jeweilige Teigling (1) in einer Randschicht bzw. -zone (8) auftaut, die wesentlich dünner ist als der in der ersten Phase der Kältebehandlung tiefgefrorene Bereich des Teiglings (1),
und/oder daß die Intensität der Behandlung mit Wasser derart gewählt ist, daß die Randschicht oder -zone (8) eine Dicke von etwa 1 bis 2 mm aufweist.

6. Einrichtung zur Lagerung von Teiglingen im tiefgefrorenen Zustand, mit wenigstens einem Raum oder Bereich (9, 14, 20, 21) zum Einfrieren sowie zur Lagerung der Teiglinge (1) im tiefgefrorenen Zustand, gekennzeichnet durch eine von dem Raum (9, 14, 20, 21) zum Einfrieren
und Lagern getrennte Kammer (7, 16) für die Behandlung der Teiglinge (1) mit Wasser oder Wasserdampf.

7. Einrichtung nach Anspruch 11, dadurch gekennzeichnet, daß im Innenraum (17) der Kammer (7, 16) wenigstens eine Öffnung oder Düse (18) zum Austritt des Wassers oder des Wasserdampfes vorgesehen ist,
wobei vorzugsweise die wenigstens eine Düse (18) zum Austritt des Wassers in Form eines fein verteilten Wassernebels bzw. Aerosols ausgebildet ist.

8. Einrichtung nach einem der Ansprüche 6 oder 7, gekennzeichnet durch einen Transporteur (11) zum Transportieren der Teiglinge (1) durch die Kammer (16) für die Behandlung mit Wasser oder Wasserdampf und/oder durch wenigstens einen Bereich (14) für die erste Phase der Kältebehandlung und/oder durch wenigstens einen Bereich (20) für eine der Behandlung mit Wasser oder Wasserdampf folgende Kältebehandlung.

9. Einrichtung nach Anspruch 8, dadurch gekennzeichnet, daß die Kammer (16) für die Behandlung mit Wasser und/oder der wenigstens eine Bereich (14, 20) für die Kältebehandlung tunnelartig ausgebildet sind.

## Claims

1. Method for the storing of loaves for the production of bakery products in which the loaves undergo a treatment with Water and a cooling treatment for deep freezing, being held during storage in the deep frozen state, characterised in that first of all in a first phase of the cold treatment, the loaves are deep frozen in at least an outer border area, that the loaves are treated afterwards with water or water vapour in such a way that a border layer (8) of dough with an increased water content is produced in the outer surface of each loaf (1) and that in a following further phase of the cold treatment, this border layer (8) is frozen.

2. Method according to claim 1 characterised in that the deep frozen loaves (1) are treated with the water vapour in such a way that a border layer (8) of water or with an increased water content is produced in the outer surface of each loaf (1) through the condensation of water vapour, and that in the further phase of the cold treatment, this border layer (8) is frozen.

3. Method according to claim 1 or 2 characterised in that the treatment with the water vapour takes place through the arrangement of the loaves (1) in an atmosphere containing water vapour and preferably in a room or in a chamber (7) which is supplied with preferably time and/or pressure controlled water vapour via openings or nozzles, and/or that the treatment with water takes place through arrangement of the loaves in an atmosphere which has water in a finely dispersed form, in which preferably the cold treatment of the loaves (1) and the treatment of the loaves (1) with water, take place in a different chambers (40, 20; 16).

4. Method according to one of claims 1 to 3 characterised in that the treatment of the loaves (1) with water takes place in a room or in a chamber (17) which is fed water in a finely dispersed form, for example as mist or an aerosol, via openings or nozzles (18) and preferably time and/or pressure controlled, and/or that the cold treatment of the loaves (1) takes place at least partially through expansion or vaporisation of liquid CO₂ gas and/or nitrogen, and/or that the cold treatment of the loaves (1) takes place at least partially through the use of a conventional refrigeration machine, and/or that the loaves (1) are shock frozen in a phase of the cooling treatment preceding the treatment with water.

5. Method according to one of claims 1 to 4, characterised in that the intensity of the treatment with water or water vapour is chosen in such a way that each loaf (1) thaws in a border area or zone (8) which is substantially thinner than the deep freezing area of the loaves (1) of the first phase of the cooling treatment, and/or that the intensity of the treatment with water is chosen in such a way that the border layer or zone (8) has a thickness of approximately 1-2mm.

6. Device for the storage of loaves in a frozen state with at least one room or area (9, 14, 20, 21) for freezing as well as for storage of the loaves (1) in a frozen state, characterised through a chamber (7, 16) for the treatment of loaves (1) with water or water vapour divided from the room (9, 14, 20, 21) for freezing and storage.

7. A device according to claim 6 characterised in that in the inner area (17) of the chamber (7, 16) at least one opening or nozzle (18) is provided for the outflow of the water or the water vapour, in which preferably the at least one nozzle (18) is formed for the outflow of the water in the form of a finely divided water mist or aerosol.

8. Device according to one of claims 6 or 7 characterised through a transporter (11) for the transportation of the loaves (1) through the chamber (16) for the treatment with water or water vapour and/or through at least one chamber (14) for the first phase of the cool treatment and/or through at least one chamber (20) for a cold treatment following the treatment with water or water vapour.

9. Device according to claim 8 characterised in that the chamber (16) for the treatment with water and/or the at least one area (14, 20) for the cool treatment are formed in the shape of a tunnel.

## Revendications

1. Procédé pour le stockage de pâtons pour la préparation de produits de boulangerie, selon lequel les pâtons sont soumis à un traitement par de l'eau ainsi qu'à un traitement par le froid pour la surgélation et sont maintenus pendant le stockage dans un état de surgélation, caractérisé en ce que les pâtons sont d'abord surgelés dans une première phase du traitement par le froid au moins dans une région marginale extérieure, en ce que les pâtons sont traités exclusivement avec de l'eau ou de la vapeur d'eau de façon que qu'il en résulte dans la région de la surface extérieure de chaque pâton (1) une couche de bord (8) de pâte à teneur en eau accrue, et en ce que dans une phase ultérieure finale du traitement par le froid, cette couche de bord (8) est surgelée.

2. Procédé selon la revendication 1, caractérisé en ce que les pâtons surgelés (1) dont traités avec de la vapeur d'eau de façon qu'il en résulte dans la région de surface extérieure de chaque pâton (1) en raison de la condensation de la vapeur d'eau une couche de bord (8) d'eau ou à teneur en eau accrue, et en ce que dans une phase ultérieure du traitement par le froid cette couche de bord (8) est surgelée.

3. Procédé selon la revendication 1 ou 2, caractérisé en ce que le traitement avec de la vapeur d'eau s'opère en disposant les pâtons (1) dans une atmosphère contenant de la vapeur d'eau, et même avantageusement dans un espace ou dans une chambre (7) alimentée en vapeur d'eau par des ouvertures ou des buses à commande avantageusement intermittente ou pulsée,
et/ou en ce que le traitement par l'eau s'opère en disposant les pâtons dans une atmosphère qui contient l'eau sous une forme finement divisée, le traitement par le froid des pâtons (1) et le traitement par l'eau des pâtons (1) se faisant avantageusement dans des espaces différents (40, 20 ; 16).

4. Procédé selon l'une des revendications 1 à 3, caractérisé en ce que le traitement des pâtons (1) par l'eau se fait dans un espace ou dans une chambre (17) alimentée en eau sous forme finement divisée à savoir en brouillard ou en aérosol par des ouvertures ou des buses à commande avantageusement intermittente ou pulsée,
et/ou en ce que la traitement par le froid des pâtons (1) s'opère au moins partiellement par expansion ou évaporation de gaz carbonique et/ou d'azote,
et/ou en ce que le traitement par le froid des pâtons (1) s'opère au moins partiellement en utilisant d'une machine frigorifique traditionnelle,
et/ou en ce que les pâtons (1) sont très rapidement surgelés dans une phase du traitement par le froid précédant le traitement par l'eau.

5. Procédé selon l'une des revendications 1 à 4, caractérisé en ce que l'intensité du traitement par l'eau ou la vapeur d'eau est choisie de façon que chaque pâton (1) soit décongelé dans une zone ou une couche de bord (8) qui est sensiblement plus mince que la région du pâton (1) surgelée dans la première phase du traitement par le froid,
et/ou en ce que l'intensité du traitement par l'eau est choisie de façon que la zone ou couche de bord (8) présente une épaisseur d'environ 1 à 2 mm.

6. Installation pour le stockage de pâtons à l'état surgelé, comprenant au moins un espace ou une région (9, 14, 20, 21) pour la surgélation ainsi que pour le stockage des pâtons (1) à l'état surgelé, caractérisée par une chambre (7, 16) séparée de l'espace (9, 14, 20, 21) de surgélation et de stockage, pour le traitement des pâtons (1) par de l'eau ou de la vapeur d'eau.

7. Installation selon la revendication 6, caractérisée en ce que, dans l'espace intérieur (17) de la chambre (7, 16), est prévue au moins une ouverture ou une buse (18) pour l'injection d'eau ou de vapeur d'eau,
ladite au moins une buse (18) étant avantageusement agencée pour l'injection d'eau sous forme d'un aérosol ou d'un brouillard d'eau finement divisé.

8. Installation selon l'une des revendications 6 ou 7, caractérisée par un convoyeur (11) pour transporter les pâtons (1) à travers la chambre (16) en vue du traitement par l'eau ou la vapeur d'eau et/ou par au moins une région (14) pour la première phase du traitement par le froid et/ou par au moins une région (20) pour un traitement par le froid suivant le traitement par l'eau ou la vapeur d'eau.

9. Installation selon la revendication 8, caractérisée en ce que la chambre (16) de traitement par l'eau ou la vapeur d'eau et/ou ladite au moins une région (14, 20) pour le traitement par le froid sont réalisées sous forme de tunnel.
